# DEMANDE DE BREVET EUROPEEN

(11) **EP 1 731 252 A2**
(43) Date de publication de la demande: **13.12.2006**
(21) Numéro de dépôt: 06300461.8
(22) Date de dépôt: 12.05.2006
(51) Int. Cl.: B23K 9/173

(54) **Procédé de soudo-brasage TIG avec mélange argon, hélium et hydrogène**

(30) Priorité: 06.06.2005 FR 0551508
(71) Demandeur: L'AIR LIQUIDE S.A., 75321 Paris Cédex 07 (FR)
(72) Inventeur: BORNE, André, 95550, BESSANCOURT (FR); REVEL, Olivier, 95480, PIERRELAYE (FR); OPDERBECKE, Thomas, 95310, SAINT OUEN L'AUMONE (FR)
(74) Mandataire: Pittis, Olivier

(57) **Abrégé**

Procédé de soudo-brasage TIG d'une ou plusieurs pièces en acier mettant en oeuvre une torche de soudage TIG, un fil fusible et un gaz de protection, caractérisé en ce que le gaz de protection est un mélange gazeux ternaire formé d'hélium, d'hydrogène et d'argon, contenant moins de 5% en volume d'hélium, moins de 1 % en volume d'hydrogène et de l'argon pour le reste. Application du procédé au soudage de tôle en acier carbone galvanisées pour l'automobile.

## Description

La présente invention porte sur un procédé de soudo-brasage TIG des aciers au carbone non revêtus et galvanisés utilisant un mélange gazeux contenant de l'argon, de l'hélium et de l'hydrogène.

Le brasage TIG ou soudo-brasage TIG sous gaz de protection, ainsi que les procédés de brasage MAG, plasma ou laser sont des procédés classiquement utilisés dans le domaine de la construction automobile, en particulier pour assembler entre eux certains éléments de carrosserie de véhicules, tels que éléments de coffres ou de toits, en particulier lorsqu'il existe des exigences sévères au niveau de l'aspect de cordon et de l'étanchéité, principalement sur configuration d'assemblage à clin et à bords tombés.

Le procédé de soudage TIG avec fil d'apport ou soudo-brasage TIG consiste à assembler des pièces métalliques l'une avec l'autre en réalisant un joint de soudure entre elles par fusion d'un fil d'apport fusible au moyen d'une torche de soudage TIG, c'est-à-dire munie d'une électrode en tungstène alimentée en courant électrique, et en mettant en oeuvre une protection gazeuse adaptée.

En brasage, en théorie, on ne fond pas le métal de base, c'est-à-dire les bords des pièces à assembler, car la liaison est assurée par diffusion du métal d'apport dans le métal de base, ce qui permet notamment d'assembler des pièces constituées de métaux dissemblables ou d'un même métal mais de nuances différentes. Toutefois, en pratique, dans la plupart des procédés de brasage à l'arc, on observe une légère fusion du métal de base.

De façon rémanente, il est assez difficile d'augmenter la productivité et la qualité du brasage TIG des tôles galvanisées pour l'automobile.

Plusieurs solutions basées sur un choix de gaz particulier ont déjà été proposées pour tenter de résoudre ce problème mais aucune n'a donné pleinement satisfaction jusqu'à présent.

Ainsi, l'argon pur utilisé en tant que gaz de brasage présente le désavantage de conduire à un mouillage insuffisant et un manque de régularité dû aux instabilités d'arc, ce problème se manifeste à des vitesses de brasage élevée, c'est-à-dire typiquement à plus de 50 cm/min.

Pour y remédier, des mélanges binaires formés d'argon et d'hydrogène ont été proposés, notamment par le document GB-A-2038687 car l'hydrogène apporte une constriction et une stabilisation de l'arc associé à un effet réducteur en surface du bain. Toutefois, il a été constaté que de tels mélanges Ar/H₂ engendrent une porosité importante dans le joint pour les teneurs en hydrogène supérieure à environ 2.5% en volume. Or, pour améliorer le mouillage et la vitesse de soudage, une teneur plus élevée en hydrogène serait souhaitable.

Par ailleurs, le document EP-A-1201345 a proposé d'utiliser des mélanges binaires d'argon et d'hélium. En effet, l'hélium conduit à une tension d'arc plus élevée et donc une énergie de soudage plus élevée, ce qui engendre un mouillage plus élevé mais aussi des déformations plus importantes. De plus, comme ces mélanges augmentent sensiblement la tension d'arc, l'assemblage des tôles fines est rendu plus difficile et, en outre, des déformations plus importantes sont observées et surtout la vitesse de soudage n'est pas améliorée par rapport aux mélanges binaires argon/hydrogène.

De plus, les mélanges binaires argon/hélium rendent l'amorçage de l'arc plus difficile et imposent de réaliser cet amorçage sous argon seul, avant de passer, lors du soudage, au mélange argon/hélium, ce qui complique le procédé.

En outre, le document EP-A-1295669 a proposé un mélange ternaire pour soudage TIG contenant de l'argon, de l'hélium et de l'hydrogène. Or, ce mélange gazeux présente l'inconvénient d'engendrer une énergie de soudage trop importante du fait de la haute teneur en hélium et en hydrogène, ce qui provoque des déformations trop importantes des assemblages obtenus. Ce gaz n'est pas préconisé pour réaliser du soudo-brasage.

Enfin, le document US-A-6237836 porte sur un mélange gazeux contenant de l'argon, de l'hélium et de l'hydrogène destiné uniquement au soudage TIG de métaux ayant une conductivité thermique inférieure à celle de l'aluminium, tels les aciers fortement ou faiblement alliés. Là encore, ce gaz n'est pas préconisé pour réaliser du soudo-brasage.

Le problème à résoudre est donc de pallier aux problèmes et inconvénients susmentionnés, c'est-à-dire de proposer un procédé de soudo-brasage TIG, avec apport de fil fusible, des aciers au carbone non revêtus et/ou galvanisés permettant d'améliorer la productivité et la qualité du soudo-brasage de ces aciers, en particulier des tôles en acier galvanisé destinées au secteur de la construction de véhicules automobiles.

La solution de l'invention est un procédé de soudo-brasage TIG d'une ou plusieurs pièces en acier mettant en oeuvre une torche de soudage, un fil fusible et un gaz de protection, caractérisé en ce que le gaz de protection est un mélange gazeux ternaire formé d'hélium, d'hydrogène et d'argon, contenant moins de 5% en volume d'hélium, moins de 1% en volume d'hydrogène, et de l'argon pour le reste.

Selon le cas, le procédé de soudo-brasage TIG de l'invention peut comprendre l'une ou plusieurs des caractéristiques suivantes :
- le mélange gazeux contient au moins 0,1% en volume d'hélium.
- le mélange gazeux contient au moins 0,4% en volume d'hélium, de préférence au moins 0,5% en volume d'hélium.
- le mélange gazeux contient de l'ordre de 1% en volume d'hélium.
- le mélange gazeux contient moins de 0,8% en volume d'hydrogène.
- le mélange gazeux contient au moins 0,1% en volume d'hydrogène.
- le mélange gazeux contient de l'ordre de 0,5% en volume d'hydrogène.
- on opère un soudo-brasage de plusieurs pièces en acier au carbone.
- on opère un soudo-brasage de plusieurs pièces en acier au carbone galvanisées ou zinguées.
- le fil fusible est en cupro-silicium (CuSi₃) ou en cupro-aluminium.

L'invention concerne, par ailleurs, un procédé de fabrication de carrosseries automobiles dans lequel on assemble entre elles des pièces en acier au carbone par mise en oeuvre d'un procédé de de soudo-brasage TIG avec fil d'apport selon l'invention, de préférence la torche est porté par un bras robotisé.

Le procédé de soudo-brasage TIG de l'invention consiste donc à assembler des pièces métalliques l'une avec l'autre, en particulier des pièces en acier au carbone revêtues, notamment galvanisées ou électro-zinguées, en réalisant un joint de soudure entre elles par fusion du fil d'apport fusible au moyen de la torche de soudage à l'arc TIG.

Lors de la réalisation du joint de soudure, on ne cherche pas à fondre volontairement les bords des pièces à assembler. La liaison entre les pièces est normalement obtenue uniquement par fusion du fil d'apport et solidification subséquente du métal ainsi déposé. Toutefois, dans certains cas, on peut assister à une légère fusion desdits bords mais une telle fusion n'est pas recherchée, ni souhaitée.

Durant l'opération de soudo-brasage, on protège la zone de soudo-brasage avec un mélange gazeux ternaire de protection formé d'hélium, d'hydrogène et d'argon.

Le mélange ternaire préféré utilisable dans le procédé de soudo-brasage selon l'invention est constitué essentiellement d'argon additionné de 1 % hélium et de 0.5% hydrogène (% en volume). Toutefois, des mélanges gazeux de compositions proches de ce mélange ternaire donnent des résultats similaires.

Ainsi, on a constaté qu'une teneur minimale en hélium de l'ordre 0.5% présente de bons résultats mais est un peu plus difficile à conditionner.

De même, une teneur en hélium de 5% est acceptable, alors qu'une teneur de 10% en hélium est défavorable du fait de l'énergie plus importante qu'elle engendre, laquelle conduit à des déformations exagérées ainsi qu'à un décapage trop important de la couche de zinc se trouvant en superficie des tôles d'acier revêtues de zinc.

Le Tableau 1 suivant consigne les résultats obtenus lors d'essais comparatifs de mise en oeuvre d'un procédé de soudo-brasage TIG visant à montrer l'influence des différents constituants de mélanges gazeux de compositions variables sur le mouillage, la vitesse de soudage, le nombre de projections et la porosité du cordon de soudage obtenu sur des pièces d'acier non revêtu et d'acier galvanisé.

Les conditions d'essais mises en oeuvre pour réaliser ces essais sont données dans le Tableau 2.

**Tableau 1**

| Composition du gaz (% en volume) | Acier non revêtu | Acier galvanisé |
|---|---|---|
| Ar+0.5%H₂+1%He | Bon | Bon |
| Ar + 0.5% H₂ + 5% He | Acceptable | Acceptable |
| Ar + 0.5% H₂ + 10% He | Mauvais | / |
| Ar + 2.5% H₂ | Passable | Bon |
| Ar | Mauvais | Passable |
| Ar + 5% H₂ + 20% He | Mauvais | Mauvais |

**Tableau 2**

| Fil d'apport | Intensité (en A) | Tension (en V) | Vitesse de soudage (m/min) | Vitesse de fil (m/min) | Epaisseur de tôle (mm) |
|---|---|---|---|---|---|
| CuSi₃ | | | | | |
| ∅ 1 mm | 140 | 13 | 1 | 4 | 1 |
| CuSi₃ | | | | | |
| ∅ 1 mm | 170 | 13 | 2 | 5 | 1 |
| CuSi₃ | | | | | |
| ∅ 1.2 mm | 155 | 10.5 | 1 | 3.5 | 2 |

La configuration des assemblages soudés est à clin et à plat.

Les fils utilisés sont de type CuSi₃ avec un diamètre (∅) de 1 ou 1.2 mm selon l'essai.

On voit dans le Tableau 1 précédent que seuls les mélanges gazeux conformes à l'invention permettent d'obtenir des résultats acceptables ou bons aussi bien sur acier non revêtu que sur acier galvanisé, i.e. avec revêtement de zinc.

En particulier, le mélange Ar + 0.5% H₂ + 1% He présente les meilleurs performances. Les mélanges comportant de plus fortes proportions d'hélium présentent une énergie de soudage trop importante entraînant des déformations pouvant être exagérées.

Le mélanges binaire à 2.5% d'hydrogène présente des risque de porosité dans le cordon si l'on utilise la pratique du balayage pour réaliser l'assemblage.

Par ailleurs, des essais complémentaires ont été fait avec des mélanges gazeux ternaires formés :
- Essai A : 0,5% H₂ + 1 % He + Ar (le reste)
- Essai B : 0,5% H₂ + 20% He + Ar (le reste)

Les conditions de soudage dans ces essais A et B étaient identiques, à savoir : intensité de 120 A, tension de 11.5 V, vitesse de fil (Vf) de 4m/min, vitesse de soudage (Vs) de 1 m/min et débit de gaz de 15 I/min. Le fil d'apport utilisé est de type CuSi₃.

Un examen visuel de la surface des cordons de soudure ainsi obtenus (Essais A et B) fait apparaître, qu'avec 20% d'hélium, une plus grande quantité de fumée a été déposée devant le cordon et une trace de zinc brûlé est visible derrière le cordon du fait de l'énergie plus importante qu'apporte un mélange contenant davantage d'hélium.

En outre, d'autres essais ont été fait avec des mélanges gazeux constitués de :
- Essai C : 2,5% H₂ + 20% He + Ar (le reste)
- Essai D : 5% He + Ar (le reste)

L'essai D réalisé avec un gaz de type ARCAL™ 31 de la Société L'AIR LIQUIDE ne donnait pas satisfaction du fait des irrégularités présentes dans le cordon.

Les paramètres de soudage mis en oeuvre étaient alors : intensité de 155 A, tension de 12.5 V, vitesse du fil de 2.9 m/min, vitesse de soudage de 1 m/min, débit de gaz de 15 l/min. Le fil d'apport utilisé est de type CuSi₃.

Ici, un examen visuel des surfaces de cordon présente des irrégularités en l'absence d'une teneur minimale en hydrogène, c'est-à-dire dans l'essai D.

Un mélange ternaire mis en oeuvre dans un procédé selon l'invention permet d'obtenir un effet bénéfique sur la vitesse de soudage, en particulier une vitesse maximale de soudage de l'ordre de 2 m/min voire 3.5m/min sur tôles électro-zinguées, le mouillage, et l'aspect du cordon de soudage, permet d'éviter le problème de porosité en CuSi₃, et conduit à un mélange gazeux moins coûteux du fait d'une teneur en hélium faible (moins de 5%) et à un amorçage plus facile.

Le procédé de l'invention peut être mis en oeuvre en particulier par une installation de soudage robotisé telle celle décrite dans le document EP-A-1459831.

## Revendications

1. Procédé de soudo-brasage TIG d'une ou plusieurs pièces en acier mettant en oeuvre une torche de soudage TIG, un fil fusible et un gaz de protection, **caractérisé en ce que** le gaz de protection est un mélange gazeux ternaire formé d'hélium, d'hydrogène et d'argon, contenant :
- moins de 5% en volume d'hélium,
- moins de 1 % en volume d'hydrogène et
- de l'argon pour le reste.

2. Procédé selon la revendication 1, **caractérisé en ce que** le mélange gazeux contient au moins 0,1% en volume d'hélium.

3. Procédé selon l'une des revendications 1 ou 2, **caractérisé en ce que** le mélange gazeux contient au moins 0,4% en volume d'hélium, de préférence au moins 0,5% en volume d'hélium.

4. Procédé selon l'une des revendications 1 à 3, **caractérisé en que** le mélange gazeux contient de l'ordre de 1 % en volume d'hélium.

5. Procédé selon l'une des revendications 1 à 4, **caractérisé en ce que** le mélange gazeux contient moins de 0,8% en volume d'hydrogène.

6. Procédé selon l'une des revendications 1 à 5, **caractérisé en ce que** le mélange gazeux contient au moins 0,1% en volume d'hydrogène.

7. Procédé selon l'une des revendications 1 à 6, **caractérisé en ce que** le mélange gazeux contient de l'ordre de 0,5% en volume d'hydrogène.

8. Procédé selon l'une des revendications 1 à 7, **caractérisé en ce que** le mélange gazeux ternaire est constitué de 0.45% à 0,55% en volume d'hydrogène, de 0,95 à 1,05% en volume d'hélium et d'argon pour le reste.

9. Procédé selon l'une des revendications 1 à 8, **caractérisé en ce que** le mélange gazeux ternaire est constitué de 0.5% en volume d'hydrogène, de 1% en volume d'hélium et d'argon pour le reste.

10. Procédé selon l'une des revendications 1 à 9, **caractérisé en ce qu'**on opère un soudo-brasage de plusieurs pièces en acier au carbone.

11. Procédé selon l'une des revendications 1 à 10, **caractérisé en ce qu'**on opère un soudo-brasage de plusieurs pièces en acier au carbone galvanisées ou zinguées.

12. Procédé l'une des revendications 1 à 11, **caractérisé en ce que** le fil fusible est en cupro-silicium (CuSi₃) ou en cupro-aluminium.

13. Procédé de fabrication de carrosseries automobiles dans lequel on assemble entre elles des pièces en acier au carbone par mise en oeuvre d'un procédé de de soudo-brasage TIG avec fil d'apport selon l'une des revendications 1 à 12.

14. Procédé de fabrication selon la revendication 13, **caractérisé en ce que** la torche de soudage est porté par un bras robotisé.
